# EUROPÄISCHE PATENTANMELDUNG

(11) **EP 1 217 760 A1**
(43) Veröffentlichungstag der Anmeldung: **26.06.2002**
(21) Anmeldenummer: 01000735.9
(22) Anmeldetag: 10.12.2001
(51) Int. Cl.: H04B 3/54

(54) **Anordnung und Verfahren zur Datenkommunikation in einem Energieverteilungsnetz**

(30) Priorität: 11.12.2000 DE 10061585
(71) Anmelder: SIEMENS AKTIENGESELLSCHAFT, 80333 München (DE)
(72) Erfinder: Bienek, Bernd, 46395, Bocholt (DE); Gröting, Wolfgang, 46149, Oberhausen (DE)

(57) **Zusammenfassung**

Die vorliegende Erfindung betrifft eine Anordnung und ein Verfahren zur Datenkommunikation in einem Energieverteilungsnetz (3) mit Kommunikationseinheiten (1) für die Informationsverarbeitung und Koppeleinheiten (2), welche die Kommunikationseinheiten an das Energieverteilungsnetz (3) ankoppeln, wobei die Informationen der Kommunikationseinheiten (1) mittels mehrere Übertragungskanäle übertragen werden.

## Beschreibung

Die vorliegende Erfindung betrifft eine Anordnung und ein Verfahren zur Datenkommunikation in einem Energieverteilungsnetz.

Die Technologie der Übertragung von Daten über das Energieverteilungsnetz ist grundsätzlich bekannt. So werden z.B. für die Steuerung von elektrischen Einrichtungen im Energieverteilungsnetz Steuerungsdaten direkt über die Netzleitung übertragen, wobei die zu sendenden Informationen auf die Wechselspannung des Energieverteilungsnetz aufmoduliert werden. Im "Inhouse"-Bereich sind sogenannte "Babyphones" bekannt, die eine Übertragung von Sprachsignalen über die Netzleitung ermöglichen.

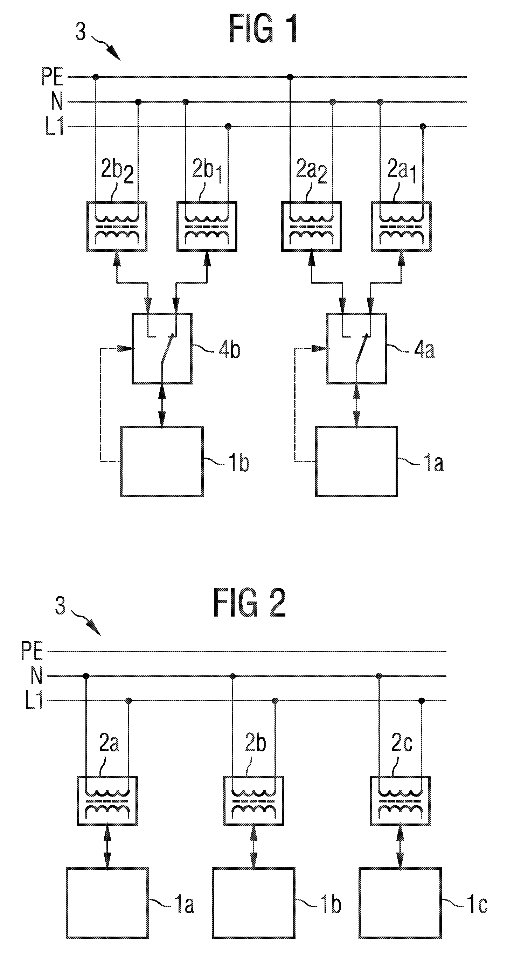

Bei der Power Line Communication (PLC) wird das Energieverteilungsnetz vom Mittelspannungsbereich bis zum "Inhouse"-Bereich für die Telekommunikation genutzt. Das Energieverteilungsnetz ist ab dem letzten Niederspannungstransformator, welcher durchschnittlich 150 bis 200 Haushalte versorgt, bis zu den Verbrauchern meist als Baum ausgelegt. Wie in Fig. 2 dargestellt, erfolgt der Anschluß des Teilnehmers bzw. der Kommunikationseinheit 1a, 1b, 1c an die Netzleitung 3 mittels einer Koppeleinheit 2a, 2b, 2c zur Netztrennung. Die Kommunikation zwischen den Kommunikationseinheiten 1a, 1b und 1c erfolgt über einen Kanal, welchen die Adern N und L1 der Netzleitung 3 bilden.

Die für die Power Line Communication (PLC) zur Verfügung stehende Bandbreite ist bei höheren Frequenzen im wesentlichen durch die Leitungsdämpfung und die Anzahl der angeschlossenen Kommunikationseinheiten 1a, 1b, 1c begrenzt. Die Dämpfung ist von den verwendeten Kabeltypen und von der Art und Anzahl der Abzweige, d.h. der Topologie des Netzes, abhängig. Weiterhin kommt es zu ausbreitungsbedingte zeitliche Schwankungen der Signalstärke bei dem Empfänger. Diese Erscheinung wird als Schwund (fading) bezeichnet. Die Ursachen hierfür können Interferenzen, Verzerrungen und Dämpfungen auf dem Übertragungskanal sein.

Eine hochbitratige Datenkommunikation (z.B. in dem Frequenzbereich 2,2MHz bis 9,4MHz im "Access"-Bereich und 10,5 bis 24MHz im "Inhouse"-Bereich) über die Leitungen des Energieverteilungsnetzes (Powerline) ist in der dafür benötigten Kanalqualität deshalb schwierig oder nicht möglich.

Die der Erfindung zu Grunde liegende Aufgabe besteht darin, eine Anordnung bzw. ein Verfahren zu schaffen, daß die Datenkommunikation in einem Energieverteilungsnetz verbessert.

Diese Aufgabe wird gemäß den Merkmalen des Patentanspruchs 1 bzw. 6 gelöst. Somit werden die Kommunikationseinheiten für die Kommunikation über ein Energieverteilungsnetz an mehrere Übertragungskanäle angekoppelt.

Mit Hilfe der über mindestens zwei Übertragungskanäle parallel übertragen Signale (Diversity) können sehr effektive Verfahren zur Fehlerkorrektur der empfangenen Signale durchführt werden. So kann z.B. für eine Kommunikation der Übertragungskanal mit der höchsten Kanalqualität bzw. der stärkste Kanal auswählt werden.

Das Signalstörverhältnis und somit die Empfindlichkeit am Empfänger wird verbessert. Der Dynamikbereich wird vergrößert. Die Sendeleistung der Kommunikationseinheiten kann verringert werden. Die zu sendenden Informationen können über größere Entfernungen im Energieverteilungsnetz übertragen werden, wodurch die Abstände der Repeater erhöht werden können. Dies reduziert die benötigten Hardwarekomponenten, den Montageaufwand und somit die Kosten im Energieverteilungsnetz.

Die Erfindung wird durch die Merkmale der abhängigen Ansprüche weitergebildet.

Die vorliegende Erfindung wird nachfolgend an Hand von Beispielen unter Bezug auf die beigefügten Zeichnungen näher erläutert, in denen zeigen
Fig. 1 ein Beispiel für die erfindungsgemäße Anordnung zur Datenkommunikation in einem Energieverteilungsnetz,
Fig. 2 schematisch die herkömmliche Vorgehensweise bei der Kommunikation über das Energieverteilungsnetz gemäß dem Stand der Technik,
Fig. 3 ein Ausführungsbeispiel der Ankoppelung einer Kommunikationseinheit an das Energieverteilungsnetz zur Datenkommunikation in einem Energieverteilungsnetz gemäß der Erfindung,
Fig. 4 ein Ausführungsbeispiel der Kommunikationseinheit gemäß einer Anschaltung nach Fig. 3,
Fig. 5 ein weiteres Ausführungsbeispiel der Ankoppelung einer Kommunikationseinheit an das Energieverteilungsnetz zur Datenkommunikation in einem Energieverteilungsnetz gemäß der Erfindung,
Fig. 6 ein Beispiel für das erfindungsgemäße Verfahren zur Datenkommunikation in einem Energieverteilungsnetz.

In der in Fig. 1 dargestellten Schaltungsanordnung sind eine Kommunikationseinheit 1a und die Kommunikationseinheit 1b mit einer dreiadrigen Netzleitung 3 verbunden. Die Anschaltung an die drei Adern der Netzleitung 3 kann dabei in beliebiger Kombination erfolgen, z.B. N/L1 für den Sender und PE/N für den Empfänger, bzw. umgekehrt. Im Gegensatz zu der in der Fig. 2 gezeigten herkömmlichen Schaltungsanordnung sind die Kommunikationseinheit 1a und die Kommunikationseinheit 1b mittels zweier Koppeleinheiten 2a₁, 2a₂ bzw. 2b₁, 2b₂ und einer Schalteinrichtung 4a, 4b an die Netzleitung 3 angekoppelt. Über die Koppeleinheit 2a₁ ist die Kommunikationseinheit 1a mit den Adern N und L1 der Netzleitung 3, welche einen Übertragungskanal darstellen, verbunden. Einen anderen Übertragungskanal stellen die Adern PE und N der Netzleitung 3 dar, über welche die Kommunikationseinheit 1a mit der die Koppeleinheit 2a₂ verbunden ist. Die Schalteinrichtung 4a wird von der Kommunikationseinheit 1a gesteuert. Analog ist die Kommunikationseinheit 1b über die Koppeleinheit 2b₁, mit den Adern N und L1 und über die Koppeleinheit 2b₂ mit den Adern PE und N der Netzleitung 3 verbunden. Die Auswahl eines der beiden Kanäle PE/N oder N/L1 erfolgt durch die Kommunikationseinheit 1b mittels der Schalteinrichtung 4b.

Die Kommunikationseinheiten 1a und 1b tasten mittels der Schalteinrichtungen 4a bzw. 4b die beiden Kanäle der Netzleitung abwechselnd ab. Für den Aufbau einer Kommunikationsverbindung der Kommunikationseinheit 1a mit der Kommunikationseinheit 1b erfolgt eine Signalisierung der Kommunikationseinheit 1a zu der Kommunikationseinheit 1b abwechselnd über beide Kanäle. Nach der Auswahl des Kanals mit der höchsten Kanalqualität erfolgt der Datenaustausch der Kommunikationseinheit 1a mit der Kommunikationseinheit 1b über den ausgewählten Kanal. Verschlechtert sich die Kanalqualität des ausgewählten Kanals während der Kommunikation, kann auf den anderen Kanal gewechselt werden, wenn dieser eine höhere Kanalqualität hat. Eine Ermittlung des Übertragungskanals mit der höchsten Kanalqualität kann z.B. durch die Messung von Bitfehler erfolgen.

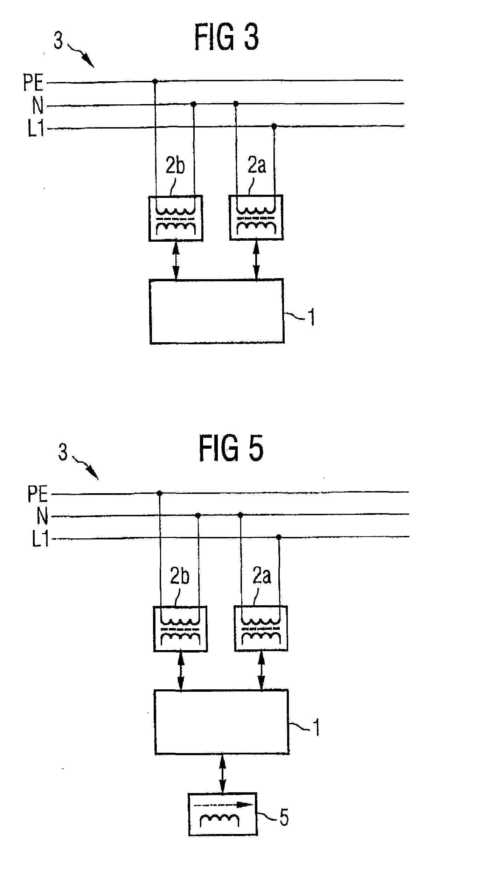

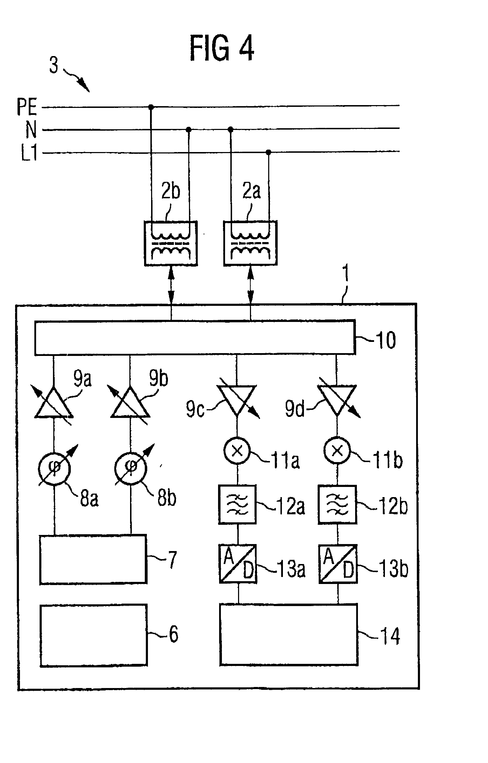

Abweichend zu der Kanalauswahl der Kommunikationseinheit 1a, 1b über eine Schalteinrichtung 4a, 4b in Fig. 1 (Switched Combining), ist die Kommunikationseinheit 1 in Fig. 3 direkt mit den Koppeleinheiten 2a und 2b verbunden. Die Kommunikationseinheit 1 in Fig. 3 muß hier für, im Gegensatz zu denen in Fig. 1, zwei Empfänger für die beiden Kanäle enthalten. Von diesen empfangenen Signalen wird dann das beste Signal ausgewählt (Selection Combining) oder es werden die empfangenen Signalen gewichtet und phasenrichtig zu einem Summensignal addiert (Maximum-Ratio Combining). Ein Beispiel für den Aufbau einer solchen Kommunikationseinheit 1 ist in Fig. 4 gezeigt. Die Kommunikationseinheit 1 enthält zwei Sendestrecken und zwei Empfangsstrecken, die jeweils zwei Übertragungskanäle für ein Diversity-Verfahren und für ein Combining-Verfahren darstellen. Der Sendeteil besteht aus einer Sendeeinheit 7, die das zu sendende Signal jeweils an zwei Phasenstellglieder 8a, 8b abgibt, und zwei Verstärkern 9a, 9b. Der Empfangsteil besteht aus zwei Verstärkern 9a, 9b mit einer Amplitudenregelung, zwei Mischern/Frequenzumsetzern 11a, 11b, zwei Bandpassfilter 12a, 12b, zwei Analog/Digital-Wandlern 13a, 13b und einem Combining-Empfänger 14 mit komplexer Amplituden- und Phasenwichtung. Die von den zwei Sendestecke unterschiedlich modulierten Signale werden über die Diversity/Kombinier-einheit 10 mittels der Koppeleinheiten 2a, 2b an die Netzleitung angekoppelt. Analog empfängt der Combining-Empfänger 14 die Signale von der Netzleitung 3 über die Koppeleinheiten 2a, 2b, die Diversity/Kombiniereinheit 10 und die zwei Empfangsstrecken 9c-11a-12a-13a / 9d-11b-12b-13b. In der Steuereinheit 6 werden alle Wichtungen der Phasen und der Amplituden in dem Sendeteil und in dem Empfangsteil gesteuert.

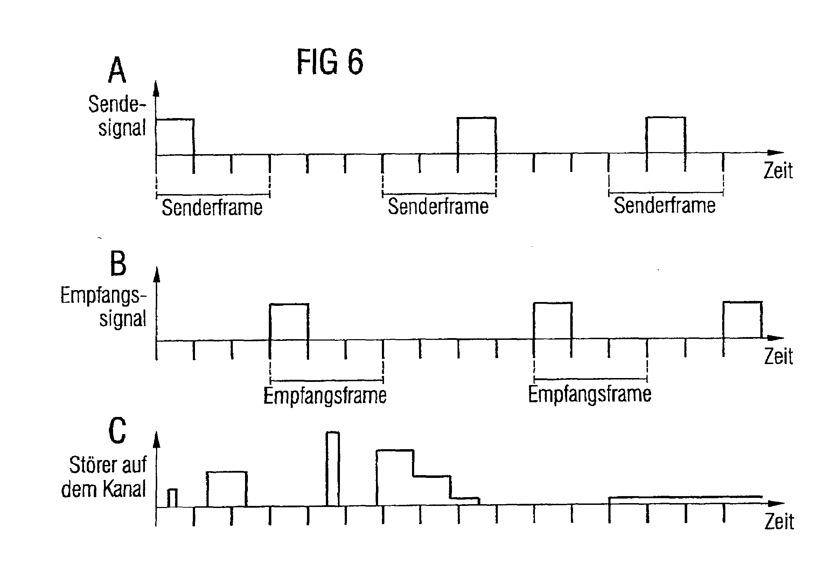

In der Schaltungsanordnung in Fig. 5 ist an die Kommunikationseinheit 1 zusätzlich eine Antenne 5 angekoppelt. Mit der Antenne 5 wird in einem weiteren Übertragungskanal eine Verbindung zu anderen Kommunikationseinheiten hergestellt. Die Signale können über Funk übertragen oder direkt in die Netzleitung 3 eingestrahlt bzw. empfangen werden. Dies kann durch eine geeignete Auslegung der Antenne auch mit einer Richtwirkung erfolgen. Die Thematik der Richtungseinkopplung von Signalen in Leitungen ist beschrieben in Zinke/Brunswig, Springer-Verlag, 1990, "Lehrbuch der Hochfrequenztechnik" und in Rothammel, Franckh-Kosmos, 1991, "Antennenbuch".

Eine weitere Möglichkeit voneinander unabhängige Übertragungskanäle für die Fehlerkorrektur z.B. Combining-Verfahren bei einem Empfänger zu erhalten, ist die Übertragung der Informationen parallel auf einer Leitung des Energieverteilungsnetzes mit verschiedener Sendefrequenzen (Frequenz-Diversity). Weiterhin gibt es die Möglichkeit, Informationen auf einer Leitung des Energieverteilungsnetzes über eine größere Zeit verteilt mehrfach zu senden (Zeit-Diversity).

Fig. 6 zeigt ein solches Verfahren für die parallele Übertragung von Informationen auf einer Leitung in voneinander unabhängige Übertragungskanälen. In dem Diagramm A ist das Sendesignal und in dem Diagramm B das Empfangssignal einer Kommunikationseinheit 1 in Abhängigkeit von der Zeit dargestellt. In dem Diagramm C ist ein mögliches Störsignal auf dem Übertragungskanal in Abhängigkeit von der Zeit aufgetragen. Die Kommunikationseinheit 1 sendet und empfängt abwechselnd während festgelegter Zeitrahmen (Frames). Die Senderahmen und Empfangsrahmen sind jeweils in drei Zeitbereiche bzw. Zeitschlitze gegliedert, welche drei Übertragungskanäle darstellen. Bei dem Senden und/oder Empfangen der Informationen werden diejenigen der drei Sendezeitschlitze und/oder der Empfangszeitschlitze (Sende- und Empfangskanäle) benutzt, in welchen die Störungen am geringsten sind und/oder in denen keine Kommunikation von anderen Kommunikationseinheiten 1 über diese Leitung erfolgt.

Die Erfindung ist nicht auf die angeführten Beispiele beschränkt. Vielmehr können die verschiedenen Diversity- und Combiningtechniken miteinander kombiniert werden. In einem Netz mit drei Phasen bestehen zudem weitere Möglichkeiten der Schaffung von Übertragungskanälen.

### Bezugszeichenliste

- 1: Kommunikationseinheit
- 2: Koppeleinheit
- 3: Netzleitung
- 4: Schalteinrichtung
- 5: Antenne
- 6: Steuereinheit
- 7: Sendeeinheit
- 8: Phasenstellglied
- 9: Verstärker
- 10: Diversity/Kombiniereinheit
- 11: Mischer/Frequenzumsetzer
- 12: Bandpassfilter
- 13: Analog/Digital-Wandler
- 14: Combiningempfänger

## Patentansprüche

1. Anordnung zur Kommunikation in einem Energieverteilungsnetz mit Kommunikationseinheiten (1) für die Informationsverarbeitung und Koppeleinheiten (2), welche die Kommunikationseinheiten (1) an das Energieverteilungsnetz (3) ankoppeln,
**dadurch gekennzeichnet,**
**daß** die Kommunikationseinheiten (1) die Informationen über mehrere Übertragungskanäle übertragen.

2. Anordnung gemäß Anspruch 1,
**dadurch gekennzeichnet,**
**daß** in dem Energieverteilungsnetz Informationen parallel über mindestens zwei Übertragungskanäle übertragbar sind und eine Combining-Schaltung vorgesehen ist, der parallel übertragene Informationen zuführbar sind und über die eine Fehlerkorrektur möglich ist.

3. Anordnung gemäß Anspruch 1 oder 2, **gekennzeichnet durch**
eine Auswahleinheit, die von parallel empfangenen Signalen das beste Signal auswählen kann (Selection Combining).

4. Anordnung gemäß Anspruch 1 oder 2, **gekennzeichnet durch**
eine Wichtungs- und Addiereinheit (9, 11, 14), die parallel empfangenen Signale wichten und phasenrichtig zu einem Summensignal addieren kann (Maximum-Ratio-Combinig).

5. Anordnung gemäß einen der Ansprüche 1 bis 4, **gekennzeichnet durch**
eine Übertragungskanalauswahleinrichtung (4a, 4b), die von einer Kommunikationseinheit (1) steuerbar ist und für eine Kommunikationverbindung aus den mehreren Übertragungskanälen mindestens einen Übertragungskanal mit einer hohen Kanalqualität auswählen kann (Raum-Diversity).

6. Anordnung gemäß einem der Ansprüche 1 bis 3,
**dadurch gekennzeichnet,**
**daß** die Informationen von Kommunikationseinheiten (1) mit dem Frequenz-Diversity-Verfahren übertragbar sind.

7. Anordnung gemäß einem der Ansprüche 1 bis 6,
**dadurch gekennzeichnet,**
**daß** die Informationen von Kommunikationseinheiten (1) mit dem Zeit-Diversity-Verfahren übertragbar sind.

8. Verfahren zur Übertragung von Informationen über ein Energieverteilungsnetz mit Kommunikationseinheiten (1) für die Informationsverarbeitung und Koppeleinheiten (2), welche die Kommunikationseinheiten (1) an das Energieverteilungsnetz (3) ankoppelen
**dadurch gekennzeichnet,**
**daß** die Kommunikation der Kommunikationseinheiten (1) über mehrere Übertragungskanäle erfolgt.

9. Verfahren gemäß Anspruch 8,
**dadurch gekennzeichnet,**
**daß** die Informationen über mindestens zwei Übertragungskanäle parallel übertragen werden und eine Fehlerkorrektur mittels der parallel übertragen Informationen durchgeführt wird (Combining).

10. Verfahren gemäß Anspruch 8 oder 9,
**dadurch gekennzeichnet,**
**daß** von parallel empfangenen Signalen das beste Signal ausgewählt wird (Selection Combining).

11. Verfahren gemäß Anspruch 8 oder 9,
**dadurch gekennzeichnet,**
**daß** eine Wichtung und eine Addition von parallel empfangenen Signale erfolgt (Maximum-Ratio-Combinig).

12. Verfahren gemäß einem der Ansprüche 8 bis 11,
**dadurch gekennzeichnet,**
**daß** von einer Kommunikationseinheit (1) für eine Kommunikationverbindung mindestens ein Übertragungskanal mit einer hohen Kanalqualität auswählt wird (Raum-Diversity).

13. Verfahren gemäß einem der Ansprüche 8 bis 12,
**dadurch gekennzeichnet,**
**daß** die Informationen von Kommunikationseinheiten (1) mit dem Frequenz-Diversity-Verfahren übertragen werden.

14. Verfahren gemäß einem der Ansprüche 8 bis 14,
**dadurch gekennzeichnet,**
**daß** die Informationen von Kommunikationseinheiten (1) mit dem Zeit-Diversity-Verfahren übertragen werden.
